(19) 

Europäisches
Patentamt
European
Patent Office
Office européen
des brevets

(11)  **EP 2 579 523 B1**

(12) **EUROPEAN PATENT SPECIFICATION**

(45) Date of publication and mention
of the grant of the patent:
**03.05.2017  Bulletin 2017/18**

(21) Application number: **11785991.8**

(22) Date of filing: **04.03.2011**

(51) Int Cl.:
***H04L 12/58*** *(2006.01)*    ***G06Q 10/10*** *(2012.01)*

(86) International application number:
**PCT/CN2011/071524**

(87) International publication number:
**WO 2011/147219 (01.12.2011 Gazette 2011/48)**

(54) **METHOD AND DEVICE FOR DISPLAYING INSTANT MESSAGING MESSAGES**

VERFAHREN UND VORRICHTUNG ZUR ANZEIGE VON INSTANT-MESSAGING-NACHRICHTEN

PROCÉDÉ ET DISPOSITIF DESTINÉS À AFFICHER DES MESSAGES DE MESSAGERIE
INSTANTANÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2010  CN 201010186537**

(43) Date of publication of application:
**10.04.2013  Bulletin 2013/15**

(73) Proprietor: **Tencent Technology (Shenzhen)
Company Limited
Shenzhen, Guangdong 518044 (CN)**

(72) Inventors:
• **PENG, Tielei
Guangdong 518044 (CN)**
• **KU, Yu
Guangdong 518044 (CN)**

(74) Representative: **Awapatent AB
P.O. Box 45086
104 30 Stockholm (SE)**

(56) References cited:
**CN-A- 101 079 894      CN-A- 101 082 917
CN-A- 101 102 255      US-A1- 2010 064 018
US-A1- 2010 070 899      US-B1- 7 814 425**

EP 2 579 523 B1

**Description**

**Field of the Invention**

The present invention relates to Instant Messaging (IM) technology, and specifically, relates to a method and a device for displaying instant messaging messages.

**Background of the Invention**

As IM (Instant Messaging) technology evolves, Instant Messenger has become an essential software tool for people's everyday life. It is not only used for leisure and entertainment purposes, but also widely used at work. The Instant Messenger allows users to an input instant messaging message containing a hyperlink as well as texts in a chat window. Here, the hyperlink, for the most part, refers to URL (Uniform Resource Locator).

When displaying an instant messaging message containing a URL, the conventional Instant Messenger only directly display the instant messaging message where the URL is located. Since the web content corresponding to the URL is unpredictable, a user receiving the instant messaging message often mistakes the URL for viruses and refuses to click on it. Therefore, a user sending the instant messaging message often needs to add a short text description for the input URL and display it together with the URL.

In the process of achieving the present invention, the inventor has found that the conventional IM technology has at least the following shortcomings:

The addition of a text description whenever a URL is entered will cause the user a lot of unnecessary efforts, and on the other hand, a simple display of the URL will impair the user's experience. Take online shopping for example. As neither of two parties of a buyer and a seller can get a vivid picture of a commodity described by the other party, they have to visit the URL sent by the other party to have the detailed information of the commodity, including the price and the postage. This is detrimental to the presentation and communication between the two parties about the commodity, in turn affecting usability and interactivity of the Instant Messenger.

US2010/064018 provides a method and apparatus for processing IM information. The method includes: obtaining hyperlink information contained in IM information; obtaining original content information of a webpage corresponding to the hyperlink information; generating content abstract information of the webpage according to the original content information of the webpage; and displaying the content abstract information of the webpage.

US2010/070899 discloses a technique to enable content from a web page to be shared directly with one or more targets, which may be an application, a buddy from a buddy list, and the like.

**Summary of the Invention**

In order to display the content of the hyperlink contained in the instant messaging message and improve the usability and interactivity of the Instant Messenger, embodiments of the present invention provide a method and device for displaying instant messaging messages. The technical solutions for the embodiments of the present invention are as follows:

In one aspect, a method for displaying instant messaging messages is provided, and the method includes:

detecting whether an instant messaging message to be displayed includes a hyperlink;

when it is detected that the instant messaging message includes the hyperlink, verifying whether the hyperlink matches a predetermined rule which is set based on uniform resource locators (URLs) of a type of service, and pulling out the abstract information corresponding to the hyperlink according to the predetermined rule when it is verified that the hyperlink matches the predetermined rule;

inserting a control;

filling the pulled-out abstract information in the inserted control; and

displaying the instant messaging message and the control in which the abstract information corresponding to the hyperlink is filled,

in which pulling out the abstract information corresponding to the hyperlink according to the predetermined rule includes:

pulling out a type of abstract information of a webpage corresponding to the hyperlink according to the predetermined rule.

In another aspect, a device for displaying instant messaging messages is also provided, and the device includes:

a detection module, configured to detect whether an instant messaging message to be displayed includes a hyperlink;

a pulling module, configured to pull out the abstract information corresponding to the hyperlink when the detection modules detected that the instant messaging message to be displayed includes the hyperlink;

a display module, configured to insert a control, to fill the abstract information pulled out by the pulling module in the inserted control and to display the instant messaging message and the control in which the abstract information corresponding to the hyperlink is filled; and

a verification module, configured to when the detection module detects that the instant messaging message to be displayed comprises the hyperlink, verify whether the hyperlink matches a predetermined rule which is set based on uniform resource locators (URLs) of a type of service;

wherein the pulling module is configured to pull out the abstract information corresponding to the hyperlink after the verification module verifies that the hyperlink matches the predetermined rule, in which pulling out the abstract information corresponding to the hyperlink according to the predetermined rule includes: pulling out a type of abstract information of a webpage corresponding to the hyperlink according to the predetermined rule.

In another aspect, a computer-readable storage medium is further provided. The computer-readable storage medium having a program recorded thereon; where the program is to make a computer execute the above method for displaying instant messaging messages.

The advantages of the technical solutions presented by the embodiments of the present invention are as follows:

By means of when detecting that a hyperlink is contained in an instant messaging message to be displayed, pulling out abstract information corresponding to the hyperlink, filling the pulled-out abstract information in a control inserted after the hyperlink, and displaying the control in which the abstract information corresponding to the hyperlink is located, the invention is able to display to users the content of the hyperlink contained in the instant messaging message. This prevents the user receiving the instant messaging message from mistaking the hyperlink for viruses and refusing to click on it while eliminating the need for the user sending the instant messaging message to input text descriptions of the hyperlink, therefore improving the usability and interactivity of the Instant Messenger.

**Brief Description of the Accompanying Drawings**

In order to better explain the technical solutions presented by the embodiments of the present invention, the following is a brief description of the accompanying drawings used for depicting the embodiments of the invention. Obviously, the drawings described below are only some of the embodiments of the invention. An ordinary technician in this art would be able to produce other drawings based on the drawings described herein without making inventive contributions.

Fig. 1 is a flow chart illustrating a method for displaying instant messaging messages presented by an embodiment of the invention;

Fig. 2 is a flow chart illustrating a method for displaying instant messaging messages presented by an embodiment of the invention;

Fig. 3 is a schematic diagram showing a structure of a device for displaying instant messaging messages presented by an embodiment of the invention;

Fig. 4 is a schematic diagram showing another structure of the device for displaying instant messaging messages presented by an embodiment of the invention;

Fig. 5 is a schematic diagram showing another structure of the device for displaying instant messaging messages presented by an embodiment of the invention.

**Detailed Description of the Invention**

Embodiment I

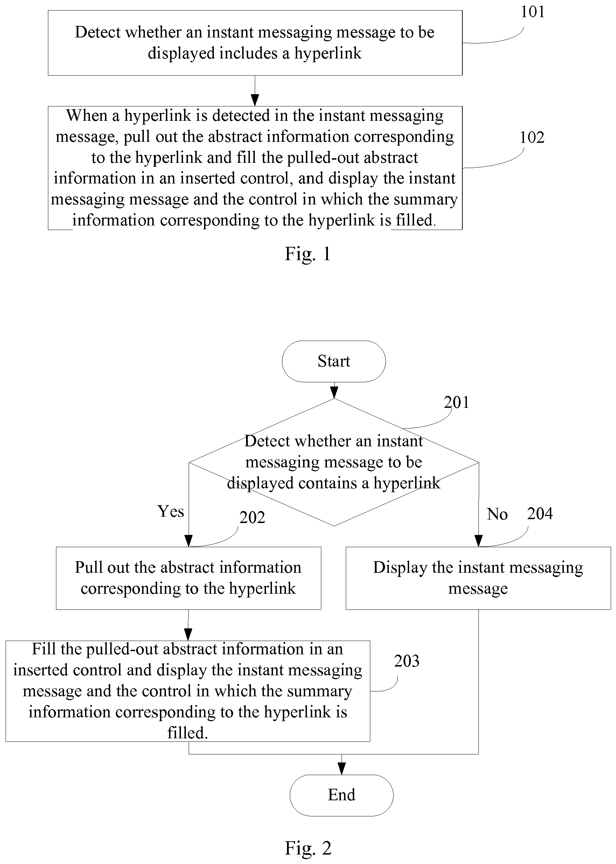

Referring to Fig. 1, this embodiment presents a method for displaying instant messaging messages, the flow chart of the method is as follows:

Block 101: detecting whether an instant messaging message to be displayed includes a hyperlink.

Block 102: when it is detected that the instant messaging message to be displayed includes the hyperlink, pulling out abstract information corresponding to the hyperlink, filling the pulled-out abstract information in an inserted control, and displaying the instant messaging message and the control in which the abstract information corresponding to the hyperlink is located. Herein, the control may be inserted either after or before the hyperlink.

By means of when detecting that a hyperlink is contained in an instant messaging message to be displayed, pulling out abstract information corresponding to the hyperlink, filling the pulled-out abstract information in a control inserted after the hyperlink, and displaying the control in which the abstract information corresponding to the hyperlink is located, the method provided by this embodiment is able to display to users the content of the hyperlink contained in the instant messaging message. This prevents the user from mistaking the hyperlink for viruses and refusing to click on it while eliminating the need for the user to input text descriptions of the hyperlink, therefore improving the usability and interactivity of the Instant Messenger and raising the user's experience.

Embodiment II

This embodiment presents a method for displaying instant messaging messages, particularly instant messaging messages containing hyperlinks. By pulling out and displaying the abstract information corresponding to a hyperlink, the embodiment enriches interface display logics to meet users' needs. Referring to Fig. 1, the flow chart of this embodiment is described as follows:

Block 201: detecting whether an instant messaging message to be displayed includes a hyperlink, when it is detected that the instant messaging message includes the hyperlink, performing Block 202, and otherwise, performing Block 204.
For this block, as many techniques are available for detecting the hyperlink, as to how to detect whether an instant messaging message to be displayed includes a hyperlink, this embodiment will not set out specific limitations and existing techniques can be used to achieve this purpose.
Block 202: pulling out abstract information corresponding to the hyperlink.

Herein, the step of pulling out the abstract information corresponding to the hyperlink may also be achieved using the existing techniques and therefore this embodiment will not specify either the method used for pulling out the abstract information or the content of the abstract information pulled out.
Optionally, in order to control the display of the abstract information corresponding to the hyperlink, this embodiment adopts a predetermined rule, i.e., when a hyperlink is detected in an instant messaging message to be displayed, the solution presented by this embodiment will first verify whether the hyperlink matches the predetermined rule and only when the hyperlink is verified as matching the predetermined rule, can the abstract information be pulled out.
This embodiment does not specify the contents or forms of the predetermined rule. To control the display of a specific hyperlink, the user can set limits on the range of the hyperlink of which the abstract information is to be displayed by setting a rule in advance. In practice, the rule for the hyperlink may be set based on the URL of a type of service. When displaying an instant messaging message including a hyperlink, the abstract information corresponding to the hyperlink of that type of service is allowed to be displayed, i.e., the abstract information corresponding to the hyperlink within the range limited by the predetermined rule can be displayed. In that case, different rules may be set for different types of services, and different hyperlinks may also correspond to different rules. In addition, after being determined, the rule can be saved and updated. Here, take a solution of rule updating adopting common configurations for example. In practice, each service is assigned with an ID (Identity) for its identification, and a controllable flag can be added for each type of service to achieve safety control. Here is an example.
The URL corresponding to Service A is http://abc.orz.xx.com, and the ID of Service A is 000386. The URL corresponding to Service B is http://xyz.com and the ID of Service B is 000123. Based on the URL of Service A, the rule for the hyperlinks of Service A is http://abc.orz.xx.com/000386.htm, and based on the URL of Service B, the rule for the hyperlinks of Service B is http//xyz.com/000123.htm.

As to the method for verifying whether a hyperlink matches the predetermined rule, since analysis of the instant messaging message received is needed and the regular expression is widely recognized as the most powerful text analysis tool, this embodiment uses some libraries from the ATL (Active Template Library) for regular expressions to illustrate how to match a hyperlink with the predetermined rule, specifically as below:

1. CATLRegExp class, this class is a regular expression class supported by ATL engineering and is a generic name for ATL.

Declaration:

```
template <class CharTraits=CAtlRECharTraits>
class CAtlRegExp;
```

Those skilled in this art can obviously understand that this section is to declare an ALT template class.

Initialization:

CATLRegExp does not provide any initialization matching string in a constructed function, instead it allows the user to use a regular expression string as a parameter by invoking its Parse() method to construct a class we need for matching. For instance, for matching a time format, it can be h:mm or hh:mm. The CAtlRegExp class constructed can be expressed as follows:

```
CAtlRegExp <> re;
re.Parse("{[0-9]?[0-9]}:{[0-9][0-9]}");
```

This section is to use the regular expression to construct a class needed for matching.

Matching:

By invoking the Match() method of CATLRegExp, the class can be used for matching. The prototype of the Match() method is as below:

$$BOOL\ Match(const\ RECHAR\ *szIn,\ CAtlREMatchContext<CharTraits>\ *pContext,$$

$$const\ RECHAR\ **ppszEnd=NULL)$$

This section is the declaration of the match function and the specific meaning of its parameters will be explained in the next paragraph.

The result of matching is returned via the CAtlREMatchContext<> class which the second parameter pContext points to. The result of matching and relevant information is all saved in the CAtlREMatchContext class. The result of matching can be obtained just by accessing CAtlREMatchContext and its members.

2. CAtlREMatchContext class

Declaration:

```
template <class CharTraits=CAtlRECharTraits>
class CAtlREMatchContext
```

This section is a declaration of a matching result class.

Usage:

CAtlREMatchContext provides an invoker with information of a matching result via an m_uNumGroups member and a GetMatch () method. Herein, the m_uNumGroups represents the number of the Groups matched. The GetMatch() returns pointers of pStart and pEnd of the matched string based on the Index values of the Groups transmitted to it. With these two pointers, the invoker can easily get the matching result.

For ease of comprehension, this embodiment takes the predetermined rule http://xyz.news.aa.com/000386.htm for example to illustrate in more detail the matching process based on the above described matching method.

If the hyperlink is http://xyz.news.aa.com/20100521/000386.htm, when invoking the class in the aforementioned ATL for matching the rule, it can be found that the content of the hyperlink matches the predetermined rule. However, for the hyperlink http://x.s.com/abc, since the content of the hyperlink is disparate from that of the predetermined rule, the hyperlink is thus verified as mismatching the predetermined rule.

Furthermore, apart from placing limits on the scope of the hyperlink of which the abstract information is to be displayed, setting the rule beforehand can limit the content of the abstract information pulled out. Namely, after detecting a hyperlink in an instant messaging message to be displayed and verifying that the hyperlink matches the predetermined rule, the method can pull out the abstract information corresponding to the hyperlink according to the predetermined rule. If the predetermined rules are different, the abstract information pulled out is of different types. In practice, this can be achieved by introducing additional limitations on the original predetermined rule.

For instance, the predetermined rule http://xyz.shopping.com/000369.htm refers to a hyperlink to an online shopping webpage. If an operator hopes to display the prices of the commodities shown on the webpage while displaying the hyperlink matching the rule, what we need to do is to reset a rule to http://xyz.shopping.com/000369.htm/price by adding a further limitation to the original predetermined rule, and if the hyperlink matches the new rule, the information on commodity prices on the webpage corresponding to the hyperlink will be pulled out and displayed as the abstract information corresponding to the hyperlink. If the operator hopes to display the pictures of the commodities on the webpage, a rule is reset to http://xyz.shopping.com/000369.htm/picture and the pictures of the commodities in question on the webpage corresponding to the hyperlink will be pulled out. Of course, the rule can be set to display both the prices and the pictures. In addition, the predetermined rule can be used for other purposes and be set in other ways. This embodiment does not have specific limitations for this.

Block 203: filling the pulled-out abstract information in an inserted control and displaying the instant messaging message and the control in which the abstract information corresponding to the hyperlink is located. The flow is ended.

Specifically, the display of the instant messaging message can be achieved via the existing techniques. This embodiment does not have specific limitations for this. The embodiment does not have any specific limitations either as to how to display the abstract information corresponding to the hyperlink and illustrates this just through an example of displaying the abstract information corresponding to the hyperlink by means of a control. In practice, an empty control may be inserted either after or before a hyperlink and then be hidden. After being pulled out, the abstract information corresponding to the hyperlink is filled in the control inserted. The control is displayed either after the display of the instant messaging message or simultaneously with the instant messaging message. If it fails to pull out the abstract information corresponding to the hyperlink, no display will be made, namely, the hidden control will remain hidden. In order to save space, the empty control may even be deleted after the failure of pulling out of the abstract information. The embodiment does not have specific limitations for this.

Simultaneously displaying an instant messaging message and the inserted control refers to a process in which the abstract information corresponding to the hyperlink is pulled out first, the abstract information is filled in the control, and then the instant messaging message is displayed together with the control in which the abstract information is located. For the process in which the control is displayed after the display of the instant messaging message, the abstract information may be displayed either before or after a subsequent instant messaging message to be displayed. For instance, if a new instant messaging message to be displayed comes in after the instant messaging message to be displayed is displayed and before the abstract information corresponding to the hyperlink is pulled out or displayed, (for descriptive convenience, all new instant messaging messages to be displayed coming in after the instant messaging message in question are called, in this embodiment, subsequent instant messaging messages to be displayed) the subsequent instant messaging message to be displayed may be displayed after the instant messaging message in question is displayed. After the abstract information corresponding to the hyperlink is pulled out, the display window is then put in a place where the inserted control is located to display the pulled-out abstract information. Of course, the subsequent instant messaging message to be displayed may also be saved in a cache memory and be displayed after the pulled-out abstract information is displayed. This embodiment does not have specific limitations for this.

Specifically, since a hyperlink may need to be displayed more than once, if matching with the predetermined rule needs to be done every time or the corresponding abstract information needs to be pulled out every time, it will be a waste of traffic and result in a decline in response speed. In order to raise efficiency, after pulling out the abstract information corresponding to the hyperlink, the method presented by this embodiment also includes a step of storing the hyperlink and the corresponding abstract information. When it is detected that the hyperlink is included in a subsequent instant messaging message, the subsequent instant messaging message and the stored abstract information corresponding to the hyperlink may be displayed directly to avoid a repeated pulling-out operation, in turn raising respond speed while saving traffic. As to how to store the hyperlink and the corresponding abstract information, this embodiment does not have specific limitations. For instance, a two-level cache memory can be used to store the hyperlink and the abstract information. The first-level cache memory caches relationship between the hyperlink URL and the predetermined rule. If they match up, the abstract information corresponding to the hyperlink will be displayed directly, in turn avoiding overhead caused by rule matching. The second-level cache memory caches the abstract information corresponding to the hyperlink and directly fills the abstract information in the corresponding control when the abstract information matches the hyperlink, in turn reducing the volume of resources and time needed for pulling out data.

In addition, while a chat window is stretching, a custom control inserted needs to change its size accordingly in order to fit in the new size of the chat window. In practice, the custom control needs to be able to sense the change in the size of the chat window. This process can be described briefly as follows: an instance object of the custom control is cached in a chat window layer, a notification will be sent to the custom control when the chat window changes its size and a control layer provides a corresponding interface for changing the arrangement of its internal control as well as the position thereof and the like.

Block 204: displaying the instant messaging message to be displayed. This flow is ended.

In this step, when an instant messaging message to be displayed does not include a hyperlink, the existing techniques can be used to display the instant messaging message to be displayed. This embodiment does not have limitations for specific display methods. In addition, if a step of controlling the display of the abstract information corresponding to the hyperlink is performed, when the hyperlink does not match the predetermined rule, the entire flow will end immediately after the display of the instant messaging message, and no subsequent step such as pulling out information needs to be performed any more.

It is important to note that an instant messaging message to be displayed needs to be displayed, whether or not the instant messaging message includes a hyperlink and whether or not the hyperlink included matches the predetermined rule. The step of displaying the instant messaging message may also precede the step of detecting whether the instant messaging message includes a hyperlink or the step of pulling out the abstract information corresponding to the hyperlink or the step of filling the pulled-out abstract information in the control inserted after the hyperlink. In an instance presented by this embodiment, the display of the instant messaging message takes place after the pulled-out abstract information is filled in the inserted control. However, the embodiment does not have limitations for this.

In addition, the method for displaying instant messaging messages presented by this embodiment illustrates how to display the abstract information corresponding to a hyperlink included in an instant messaging message when the receiving end of the instant messaging message receives the instant messaging message including only a hyperlink but not the abstract information. Besides, enlightened from the method presented by this embodiment, it may be detected whether a hyperlink is included in an instant messaging message at the transmitting end of the instant messaging message before the instant messaging message is transmitted out. When it is detected that the instant messaging message includes a hyperlink, the pulled-out abstract information will be sent to the receiving end together with the instant messaging message and the receiving end will directly display the instant messaging message and the abstract information corresponding to the hyperlink. That is to say, the steps of detecting the hyperlink in the instant messaging message and pulling out the abstract information corresponding to the hyperlink may be performed either at the receiving end of the instant messaging message or at the transmitting end thereof. This embodiment does not have specific limitations for this.

By means of when detecting that a hyperlink is contained in an instant messaging message to be displayed, pulling out abstract information corresponding to the hyperlink, filling the pulled-out abstract information in a control inserted, and displaying the control in which the abstract information corresponding to the hyperlink is located, the method presented by the embodiment is able to display to a user the content of the hyperlink contained in the instant messaging message. This prevents the user from mistaking the hyperlink for viruses and refusing to click on it while eliminating the need for the user to input text descriptions of the hyperlink, therefore improving the usability and interactivity of the Instant Messenger and enhancing the user's experience. This method can also help raise display efficiency by storing the pulled-out abstract information and directly displaying such information when needed next time.

Embodiment III

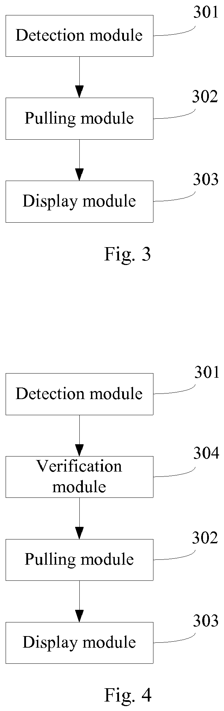

Referring to Fig.3, this embodiment presents a device for displaying instant messaging messages. The device includes:

a detection module 301, configured to detect whether an instant messaging message to be displayed includes a hyperlink;

a pulling module 302, configured to pull out abstract information corresponding to the hyperlink when the detection module 301 detects that the instant messaging message to be displayed includes the hyperlink; and

a display module 303, configured to fill the abstract information pulled out by the pulling module 302 in an inserted control and to display the instant messaging message as well as the control where the abstract information corresponding to the hyperlink is located. The control may be inserted either after or before the hyperlink.

In the device, the display module 303 may display the instant messaging message either before the detection module 301 performs the detection or before the pulling module 302 pulls out the abstract information. This embodiment does not have specific limitations for this.

Optionally, referring to Fig. 4, the device for displaying instant messaging messages may further include:

a verification module 304, configured to when the detection module 301 detects that the instant messaging message to be displayed includes the hyperlink, verify whether the hyperlink matches a predetermined rule.

Accordingly, the pulling module 303 is specifically configured to pull out the abstract information corresponding to the hyperlink after the verification module 304 verifies that the hyperlink matches the predetermined rule.

Specifically, the display module 303 is configured to insert an empty control after or before the hyperlink, to hide the inserted control, to fill the abstract information pulled out by the pulling module 302 in the inserted control, and to display the control after displaying the instant messaging message or display the instant messaging message and the control simultaneously.

Furthermore, the display module 303 may be further configured to display a subsequent instant messaging message to be displayed before or after displaying the abstract information corresponding to the hyperlink.

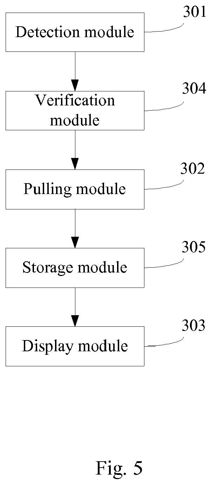

Specifically, referring to Fig. 5, the device for displaying instant messaging messages may further include:

a storage module 305, configured to store the hyperlink and the abstract information corresponding to the hyperlink after the pulling module 302 pulls out the abstract information corresponding to the hyperlink.

Accordingly, the display module 303 may further be configured to when it is detected that the subsequent instant messaging message to be displayed includes the hyperlink, directly display the subsequent instant messaging message and the stored abstract information corresponding to the hyperlink.

To sum up, by means of when detecting that a hyperlink is contained in an instant messaging message to be displayed, pulling out abstract information corresponding to the hyperlink, filling the pulled-out abstract information in a control inserted after or before the hyperlink, and displaying the control in which the abstract information corresponding to the hyperlink is located, the device presented by the embodiment is able to display to a user the content of the hyperlink contained in the instant messaging message. This prevents the user from mistaking the hyperlink for viruses and refusing to click on it while eliminating the need for the user to input text descriptions of the hyperlink, therefore improving the usability and interactivity of the Instant Messenger and enhancing the user's experience. This device can also help raise display efficiency by storing the pulled-out abstract information and directly displaying such information when needed next time.

It is important to note that in illustrating how the device presented by the above embodiment displays instant messaging messages, the above descriptions are based on division of functions of the above modules. In practice, the above functions may be assigned to different modules according to specific needs, namely dividing the internal structure of the device into different functional modules to perform all or part of the functions described above. In addition, the above embodiment presenting the device for displaying instant messaging messages and the embodiment presenting the method for displaying instant messaging messages described in previous paragraphs are derived from the same concept. The specific steps of implementing the embodiments presenting the device can be found in the description of the embodiment presenting the method and will not be discussed again herein.

The serial numbers used in the embodiments of the invention are just for descriptive purposes and do not represent the qualities of the embodiments.

All or part of the steps in the embodiments of the invention may be achieved with the help of software. Applicable software programs may be stored in a readable storage medium, such as an optical disk or a hard disk or the like.

The foregoing is only embodiments of the present invention and is not used to limit the protection scope of the present invention. Any modification, equivalent substitution and improvement without departing from the principle of the present invention are within the scope of the present invention as defined in the appended claims.

**Claims**

1. A method for displaying instant messaging messages, comprising:

   detecting whether an instant messaging message to be displayed comprises a hyperlink (101);
   when it is detected that the instant messaging message comprises the hyperlink, **characterized by** verifying whether the hyperlink matches a predetermined rule which is set based on uniform resource locators (URLs) of a type of service, and pulling out abstract information corresponding to the hyperlink according to the predetermined rule when it is verified that the hyperlink matches the predetermined rule;
   inserting a control;
   filling the pulled-out abstract information in the inserted control; and
   displaying the instant messaging message as well as the control in which the abstract information corresponding to the hyperlink is filled (102),
   wherein pulling out the abstract information corresponding to the hyperlink according to the predetermined rule comprises:

   pulling out a type of abstract information of a webpage corresponding to the hyperlink according to the predetermined rule.

2. The method according to claim 1, **characterized in that**, the control is inserted after or before the hyperlink.

3. The method according to claim 1, **characterized in that**, the inserting a control comprises:

   inserting an empty control after or before the hyperlink; and
   hiding the control.

4. The method according to claim 1, **characterized in that**, the control is displayed after displaying of the instant messaging message; or
   the control is displayed simultaneously with displaying of the instant messaging message.

5. The method according to claim 1, **characterized in that**, before or after displaying the control in which the abstract information corresponding to the hyperlink is filled, the method further comprises:

   displaying a subsequent instant messaging message to be displayed.

6. The method according to claim 1, **characterized in that**, after pulling out the abstract information corresponding to the hyperlink, the method further comprises:

   storing the hyperlink and the abstract information corresponding to the hyperlink; and
   when it is detected that a subsequent instant messaging message to be displayed comprises the hyperlink, displaying the subsequent instant messaging message together with the stored abstract information corresponding to the hyperlink.

7. The method according to claim 1, **characterized in that**, the steps of detecting whether an instant messaging message to be displayed comprises a hyperlink and pulling out abstract information corresponding to the hyperlink are performed by a receiving end for the instant messaging message; or
   the steps of detecting whether an instant messaging message to be displayed comprises a hyperlink and pulling out abstract information corresponding to the hyperlink are performed by a transmitting end for the instant messaging message, and the pulled-out abstract information is transmitted together with the instant messaging message by the transmitting end to a receiving end.

8. A device for displaying instant messaging messages, comprising:

   a detection module (301), configured to detect whether an instant messaging message to be displayed comprises a hyperlink;

a pulling module (302), configured to pull out abstract information corresponding to the hyperlink when the detection module detects that the instant messaging message to be displayed comprises the hyperlink;

a display module (303), configured to insert a control, to fill the abstract information pulled out by the pulling module in the inserted control and to display the instant messaging message as well as the control in which the abstract information corresponding to the hyperlink is filled; and

**characterized by** a verification module (304), configured to when the detection module detects that the instant messaging message to be displayed comprises the hyperlink, verify whether the hyperlink matches a predetermined rule which is set based on uniform resource locators (URLs) of a type of service;

wherein the pulling module (302) is configured to pull out the abstract information corresponding to the hyperlink after the verification module verifies that the hyperlink matches the predetermined rule, wherein pulling out the abstract information corresponding to the hyperlink according to the predetermined rule comprises: pulling out a type of abstract information of a webpage corresponding to the hyperlink according to the predetermined rule.

9. The device according to claim 8, **characterized in that**, the control is inserted after or before the hyperlink.

10. The device according to claim 8, **characterized in that**, when inserting the control, the display module (303) is configured to insert an empty control after or before the hyperlink and hide the inserted control; and

when displaying the instant messaging message as well as the control in which the abstract information corresponding to the hyperlink is filled, the display module is configured to display the control after displaying the instant messaging message or display the instant messaging message and the control simultaneously.

11. The device according to claim 8, **characterized in that**, the display module (303) is further configured to display a subsequent instant messaging message to be displayed before or after displaying the abstract information corresponding to the hyperlink.

12. The device according to claim 8, **characterized by**, further comprising: a storage module (305), configured to store the hyperlink and the abstract information corresponding to the hyperlink after the pulling module pulls out the abstract information corresponding to the hyperlink;

wherein the display module (303) is further configured to when it is detected that the subsequent instant messaging message to be displayed comprises the hyperlink, display the subsequent instant messaging message and the stored abstract information corresponding to the hyperlink.

13. The device according to claim 8, **characterized in that**, the detection module (301) and the pulling module (302) are located at a transmitting end for the instant messaging message, the display module is located at a receiving end for the instant messaging message; or,

the detection module (301), the pulling module (302) and the display module (303) are all located at a receiving end for the instant messaging message.

**Patentansprüche**

1. Verfahren zum Anzeigen von Instant-Messaging-Nachrichten, das Folgendes umfasst:

Detektieren, ob eine anzuzeigende Instant-Messaging-Nachricht einen Hyperlink (101) umfasst;
wenn detektiert wird, dass die Instant-Messaging-Nachricht den Hyperlink umfasst, **gekennzeichnet durch**:

Verifizieren, ob der Hyperlink mit einer vorgegebenen Regel übereinstimmt, die auf der Basis der Uniform Ressource Locators (URLs) eines Diensttyps eingestellt wird, und Herausziehen abstrakter Informationen, die dem Hyperlink entsprechen, gemäß der vorgegebenen Regel, wenn verifiziert wird, dass der Hyperlink mit der vorgegebenen Regel übereinstimmt;
Einfügen einer Steuerung;
Einfüllen der herausgezogenen abstrakten Informationen in die eingefügte Steuerung; und
Anzeigen der Instant-Messaging-Nachricht sowie der Steuerung, in die die abstrakten Informationen, die dem Hyperlink entsprechen, eingefüllt wurden (102),
wobei das Herausziehen der abstrakten Informationen, die dem Hyperlink entsprechen, gemäß der vorgegebenen Regel Folgendes umfasst:

Herausziehen eines Typs von abstrakten Informationen einer Webseite, die dem Hyperlink entsprechen, gemäß der vorgegebenen Regel.

**2.** Verfahren nach Anspruch 1, **dadurch gekennzeichnet**, der die Steuerung nach dem oder vor dem Hyperlink eingefügt wird.

**3.** Verfahren nach Anspruch 1, **dadurch gekennzeichnet, dass** das Einfügen einer Steuerung Folgendes umfasst:

Einfügen einer leeren Steuerung nach dem oder vor dem Hyperlink; und
Verbergen der Steuerung.

**4.** Verfahren nach Anspruch 1, **dadurch gekennzeichnet, dass** die Steuerung nach dem Anzeigen der Instant-Messaging-Nachricht angezeigt wird; oder
die Steuerung gleichzeitig mit dem Anzeigen der Instant-Messaging-Nachricht angezeigt wird.

**5.** Verfahren nach Anspruch 1, **dadurch gekennzeichnet, dass** vor oder nach dem Anzeigen der Steuerung, in die die abstrakten Informationen, die dem Hyperlink entsprechen, eingefüllt wurden, das Verfahren des Weiteren Folgendes umfasst:

Anzeige einer anschließenden anzuzeigenden Instant-Messaging-Nachricht.

**6.** Verfahren nach Anspruch 1, **dadurch gekennzeichnet, dass** nach dem Herausziehen der abstrakten Informationen, die dem Hyperlink entsprechen, das Verfahren des Weiteren Folgendes umfasst:

Speichern des Hyperlinks und der abstrakten Informationen, die dem Hyperlink entsprechen; und
wenn detektiert wird, dass eine anschließende anzuzeigende Instant-Messaging-Nachricht den Hyperlink umfasst, Anzeigen der anschließenden Instant-Messaging-Nachricht zusammen mit den gespeicherten abstrakten Informationen, die dem Hyperlink entsprechen.

**7.** Verfahren nach Anspruch 1, **dadurch gekennzeichnet, dass** die Schritte des Detektierens, ob eine anzuzeigende Instant-Messaging-Nachricht einen Hyperlink umfasst, und des Herausziehens abstrakter Informationen, die dem Hyperlink entsprechen, durch ein Empfangs-Ende für die Instant-Messaging-Nachricht ausgeführt werden; oder
die Schritte des Detektierens, ob eine anzuzeigende Instant-Messaging-Nachricht einen Hyperlink umfasst, und des Herausziehens abstrakter Informationen, die dem Hyperlink entsprechen, durch ein Sende-Ende für die Instant-Messaging-Nachricht ausgeführt werden, und die herausgezogenen abstrakten Informationen zusammen mit der Instant-Messaging-Nachricht durch das Sende-Ende zu einem Empfangs-Ende gesendet werden.

**8.** Vorrichtung zum Anzeigen von Instant-Messaging-Nachrichten, die Folgendes umfasst:

ein Detektionsmodul (301), das dafür konfiguriert ist, zu detektieren, ob eine anzuzeigende Instant-Messaging-Nachricht einen Hyperlink umfasst;
ein Ziehmodul (302), das dafür konfiguriert ist, abstrakte Informationen herauszuziehen, die dem Hyperlink entsprechen, wenn das Detektionsmodul detektiert, dass die anzuzeigende Instant-Messaging-Nachricht den Hyperlink umfasst;
ein Anzeigemodul (303), das dafür konfiguriert ist, eine Steuerung einzufügen, um die durch das Ziehmodul herausgezogenen abstrakten Informationen in die eingefügte Steuerung einzufüllen und die Instant-Messaging-Nachricht sowie die Steuerung, in die die abstrakten Informationen, die dem Hyperlink entsprechen, eingefüllt wurden, anzuzeigen; und

**gekennzeichnet durch**

ein Verifizierungsmodul (304), das dafür konfiguriert ist, wenn das Detektionsmodul detektiert, dass die anzuzeigende Instant-Messaging-Nachricht den Hyperlink umfasst, zu verifizieren, ob der Hyperlink mit einer vorgegebenen Regel übereinstimmt, die auf der Basis der Uniform Ressource Locators (URLs) eines Diensttyps eingestellt wurde;
wobei das Ziehmodul (302) dafür konfiguriert ist, die abstrakten Informationen, die dem Hyperlink entsprechen, herauszuziehen, nachdem das Verifizierungsmodul verifiziert hat, dass der Hyperlink mit der vorgegebenen Regel übereinstimmt, wobei das Herausziehen der abstrakten Informationen, die dem Hyperlink entsprechen, gemäß der vorgegebenen Regel Folgendes umfasst: Herausziehen eines Typs von abstrakten Informationen einer Webseite, die dem Hyperlink entsprechen, gemäß der vorgegebenen Regel.

9. Vorrichtung nach Anspruch 8, **dadurch gekennzeichnet, dass** die Steuerung nach dem oder vor dem Hyperlink eingefügt wird.

10. Vorrichtung nach Anspruch 8, **dadurch gekennzeichnet, dass** beim Einfügen der Steuerung das Anzeigemodul (303) dafür konfiguriert ist, eine leere Steuerung nach dem oder vor dem Hyperlink einzufügen und die eingefügte Steuerung zu verbergen; und

das Anzeigemodul beim Anzeigen der Instant-Messaging-Nachricht sowie der Steuerung, in die die abstrakten Informationen, die dem Hyperlink entsprechen, eingefüllt wurden, dafür konfiguriert ist, die Steuerung nach dem Anzeigen der Instant-Messaging-Nachricht anzuzeigen oder die Instant-Messaging-Nachricht und die Steuerung gleichzeitig anzuzeigen.

11. Vorrichtung nach Anspruch 8, **dadurch gekennzeichnet, dass** das Anzeigemodul (303) des Weiteren dafür konfiguriert ist, eine anschließende anzuzeigende Instant-Messaging-Nachricht vor oder nach dem Anzeigen der abstrakten Informationen, die dem Hyperlink entsprechen, anzuzeigen.

12. Vorrichtung nach Anspruch 8, **gekennzeichnet durch**, dass sie des Weiteren Folgendes umfasst: ein Speichermodul (305), das dafür konfiguriert ist, den Hyperlink und die abstrakten Informationen, die dem Hyperlink entsprechen, zu speichern, nachdem das Ziehmodul die abstrakten Informationen, die dem Hyperlink entsprechen, herausgezogen hat;

wobei das Anzeigemodul (303) des Weiteren dafür konfiguriert ist, wenn detektiert wird, dass die anschließende anzuzeigende Instant-Messaging-Nachricht den Hyperlink umfasst, die anschließende Instant-Messaging-Nachricht und die gespeicherten abstrakten Informationen, die dem Hyperlink entsprechen, anzuzeigen.

13. Vorrichtung nach Anspruch 8, **dadurch gekennzeichnet, dass** das Detektionsmodul (301) und das Ziehmodul (302) sich an einem Sende-Ende für die Instant-Messaging-Nachricht befinden, das Anzeigemodul sich an einem Empfangs-Ende für die Instant-Messaging-Nachricht befindet; oder

das Detektionsmodul (301), das Ziehmodul (302) und das Anzeigemodul (303) sich alle an einem Empfangs-Ende für die Instant-Messaging-Nachricht befinden.

**Revendications**

1. Procédé d'affichage de messages de messagerie instantanée, comprenant de :

détecter si un message de messagerie instantanée à afficher comprend un hyperlien (101) ;
lorsqu'il est détecté que le message de messagerie instantanée comprend l'hyperlien, **caractérisé par**

vérifier si l'hyperlien concorde avec une règle prédéterminée qui est réglée sur la base de localisateurs de ressources uniformes (URLs) d'un type de service et extraire une information abstraite correspondant à l'hyperlien selon la règle prédéterminée lorsqu'il est vérifié que l'hyperlien concorde avec la règle prédéterminée ;
insérer une commande ;
entrer l'information abstraite extraite dans la commande insérée ; et
afficher le message de messagerie instantanée ainsi que la commande dans laquelle l'information abstraite correspondant à l'hyperlien est entrée (102),
dans lequel extraire l'information abstraite correspondant à l'hyperlien selon la règle prédéterminée comprend de :

extraire un type d'information abstraite d'une page web correspondant à l'hyperlien selon la règle prédéterminée.

2. Procédé selon la revendication 1, **caractérisé en ce que** la commande est insérée après ou avant l'hyperlien.

3. Procédé selon la revendication 1, **caractérisé en ce que** l'insertion d'une commande comprend de :

insérer une commande vide après ou avant l'hyperlien ; et
cacher la commande.

4. Procédé selon la revendication 1, **caractérisé en ce que** la commande est affichée après l'affichage du message de messagerie instantanée ; ou
la commande est affichée simultanément avec l'affichage du message de messagerie instantanée.

5. Procédé selon la revendication 1, **caractérisé en ce que**, avant ou après l'affichage de la commande dans laquelle l'information abstraite correspondant à l'hyperlien est entrée, le procédé comprend en outre de :

afficher un message de messagerie instantanée subséquent à afficher.

6. Procédé selon la revendication 1, **caractérisé en ce que**, après l'extraction de l'information abstraite correspondant à l'hyperlien, le procédé comprend en outre de :

mémoriser l'hyperlien et l'information abstraite correspondant à l'hyperlien ; et
lorsqu'il est détecté qu'un message de messagerie instantanée subséquent à afficher comprend l'hyperlien, afficher le message de messagerie instantanée subséquent conjointement à l'information abstraite mémorisée correspondant à l'hyperlien.

7. Procédé selon la revendication 1, **caractérisé en ce que** les étapes de détection qu'un message de messagerie instantanée à afficher comprend un hyperlien et d'extraction d'une information abstraite correspondant à l'hyperlien sont effectuées par une extrémité de réception pour le message de messagerie instantanée ; ou
les étapes de détection qu'un message de messagerie instantanée à afficher comprend un hyperlien et d'extraction d'une information abstraite correspondant à l'hyperlien sont effectuées par une extrémité de transmission pour le message de messagerie instantanée, et l'information abstraite extraite est transmise conjointement au message de messagerie instantanée par l'extrémité de transmission à une extrémité de réception.

8. Dispositif d'affichage de messages de messagerie instantanée, comprenant :

un module de détection (301) configuré pour détecter si un message de messagerie instantanée à afficher comprend un hyperlien ;
un module d'extraction (302) configuré pour extraire une information abstraite correspondant à l'hyperlien lorsque le module de détection détecte que le message de messagerie instantanée à afficher comprend l'hyperlien ;
un module d'affichage (303) configuré pour insérer une commande, entrer l'information abstraite extraite par le module d'extraction dans la commande insérée et afficher le message de messagerie instantanée ainsi que la commande dans laquelle l'information abstraite correspondant à l'hyperlien est entrée ; et

**caractérisé par**

un module de vérification (304) configuré pour, lorsque le module de détection détecte que le message de messagerie instantanée à afficher comprend l'hyperlien, vérifier si l'hyperlien concorde avec une règle prédéterminée qui est réglée sur la base de localisateurs de ressources uniformes (URLs) d'un type de service ;
dans lequel le module d'extraction (302) est configuré pour extraire l'information abstraite correspondant à l'hyperlien après que le module de vérification vérifie que l'hyperlien concorde avec la règle prédéterminée, dans lequel extraire l'information abstraite correspondant à l'hyperlien selon la règle prédéterminée comprend de : extraire un type d'information abstraite d'une page web correspondant à l'hyperlien selon la règle prédéterminée.

9. Dispositif selon la revendication 8, **caractérisé en ce que** la commande est insérée après ou avant l'hyperlien.

10. Dispositif selon la revendication 8, **caractérisé en ce que**, lors de l'insertion de la commande, le module d'affichage (303) est configuré pour insérer une commande vide après ou avant l'hyperlien et cacher la commande insérée ; et lors de l'affichage du message de messagerie instantanée correspondant ainsi que la commande dans laquelle l'information abstraite correspondant à l'hyperlien est entrée, le module d'affichage est configuré pour afficher la commande après l'affichage du message de messagerie instantanée ou l'affichage du message de messagerie instantanée et la commande simultanément.

**11.** Dispositif selon la revendication 8, **caractérisé en ce que** le module d'affichage (303) est en outre configuré pour afficher un message de messagerie instantanée subséquent à afficher avant ou après l'affichage de l'information abstraite correspondant à l'hyperlien.

**12.** Dispositif selon la revendication 8, **caractérisé en ce qu'**il comprend en outre : un module de mémorisation (305), configuré pour mémoriser l'hyperlien et l'information abstraite correspondant à l'hyperlien après que le module d'extraction a extrait l'information abstraite correspondant à l'hyperlien ;

dans lequel le module d'affichage (303) est en outre configuré pour lorsqu'il est détecté que le message de messagerie instantanée subséquent à afficher comprend l'hyperlien ; afficher le message de messagerie instantanée subséquent et l'information abstraite mémorisée correspondant à l'hyperlien.

**13.** Dispositif selon la revendication 8, **caractérisé en ce que** le module de détection (301) et le module d'extraction (302) sont situés à une extrémité de transmission pour le message de messagerie instantanée, le module d'affichage est situé à une extrémité de réception pour le message de messagerie instantanée ; ou

le module de détection (301), le module d'extraction (302) et le module d'affichage (303) sont tous situés à une extrémité de réception pour le message de messagerie instantanée.

```
┌─────────────────────────────────────────────────┐
│   Detect whether an instant messaging message    │      101
│   to be displayed includes a hyperlink           │
└─────────────────────────────────────────────────┘
                         │
                         ▼
┌─────────────────────────────────────────────────┐
│   When a hyperlink is detected in the instant     │
│   messaging message, pull out the abstract        │      102
│   information corresponding to the hyperlink and   │
│   fill the pulled-out abstract information in an    │
│   inserted control, and display the instant        │
│   messaging message and the control in which the   │
│   summary information corresponding to the         │
│   hyperlink is filled.                             │
└─────────────────────────────────────────────────┘
```

Fig. 1

```
                      ┌─────────┐
                      │  Start  │
                      └─────────┘
                           │
                           ▼
                        ╱───────╲                201
                   Detect whether an instant
                   messaging message to be
                   displayed contains a hyperlink
                        ╲───────╱
          Yes  202                    No    204
           │                           │
           ▼                           ▼
┌───────────────────────┐   ┌───────────────────────┐
│ Pull out the abstract │   │ Display the instant    │
│ information            │   │ messaging message      │
│ corresponding to the  │   │                        │
│ hyperlink             │   │                        │
└───────────────────────┘   └───────────────────────┘
           │                           │
           ▼                           │
┌───────────────────────┐   203        │
│ Fill the pulled-out    │             │
│ abstract information in │            │
│ an inserted control and │            │
│ display the instant     │            │
│ messaging message and   │            │
│ the control in which the │           │
│ summary information      │            │
│ corresponding to the     │            │
│ hyperlink is filled.     │            │
└───────────────────────┘             │
           │                           │
           └───────────┬───────────────┘
                       ▼
                   ┌─────────┐
                   │   End   │
                   └─────────┘
```

Fig. 2

301

Detection module

302

Pulling module

303

Display module

Fig. 3

301

Detection module

304

Verification
module

302

Pulling module

303

Display module

Fig. 4

Fig. 5

**EP 2 579 523 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010064018 A
- US 2010070899 A